# FASCICULE DE BREVET EUROPEEN

(11) **EP 0 659 492 B1**
(45) Date de publication et mention de la délivrance du brevet: **12.02.1997**
(21) Numéro de dépôt: 94402934.7
(22) Date de dépôt: 19.12.1994
(51) Int. Cl.: B06B 1/04

(54) **Dispositif de vibration épicycloidale**
Epizykloidische Schwingungsvorrichtung
Epicycloidal vibration device

(30) Priorité: 27.12.1993 FR 9315697
(43) Date de publication de la demande: 28.06.1995
(73) Titulaire: FORWARD TECHNOLOGY INDUSTRIES, F-74105 Annemasse Cédex (FR)
(72) Inventeur: Janin, Jean Louis, F-74250 Fillinges (FR); Manzo, Alain, F-74250 Fillinges (FR)
(74) Mandataire: Armengaud Ainé, Alain

(56) Documents cités:
- GB-A- 2 184 197
- GB-A- 2 189 654

## Description

La présente invention est relative à un dispositif de soudage par vibration, notamment de type épicycloïdal, en vue de permettre l'assemblage de pièces thermoplastiques, notamment issues des industries du jouet, de l'électroménager, de l'aéronautique, de l'automobile etc...

On connaît des dispositifs de soudure par vibration linéaire, dans lesquels les pièces thermoplastiques sont placées sur un plateau dont le mouvement décrit une translation alternative selon une direction préférentielle. Le plateau est généralement mû par des moyens hydrauliques ou électromagnétiques à alimentation par tension alternative ; néanmoins, ces dispositifs de par la cinématique qu'ils doivent imprimer à la pièce à souder, nécessitent qu'à un instant donné correspondant à l'extremum de la trajectoire, la vitesse du mobile, qui était non nulle et d'amplitude et de direction données quelques instants auparavant, s'annule, change de sens et atteigne une amplitude similaire en valeur absolue à la précédente, ce qui implique des variations dans le fonctionnement et le rendement énergétique du dispositif ; une fraction de l'énergie dépensée est dégradée lors du freinage du plateau, et ceci se traduit par une hétérogénéité du cordon de soudure, la température de fusion atteinte n'étant pas uniforme le long du cordon de soudure lorsque notamment celui-ci n'est pas orienté selon une direction parallèle au mouvement de déplacement du plateau.

La présente invention vise donc à pallier ces inconvénients en proposant un dispositif qui exploite les avantages des modes de vibration orbitale ; en effet, selon ce mode de vibration, le module de la vitesse demeure quasiment constant sur toute la trajectoire, les changements de direction s'effectuent de manière progressive et continue ; par ailleurs, ce mode de vibration autorise des trajectoires complexes - combinaison de translation et rotation planes - répondant au mieux aux circonvolutions des lignes de joint.

A cet effet, le dispositif de mise en vibration épicycloïdale se caractérise en ce qu'il comprend au moins un arbre solidaire par l'une de ses extrémités à un plateau, connecté par des moyens élastiques au bâti de la machine, et supportant en outre une pièce thermoplastique, ledit arbre étant pourvu au niveau de cette extrémité d'une masse magnétique, dont la mise en rotation au sein d'une pluralité de champs magnétiques provoqués par la mise sous tension d'une pluralité d'électro-aimants, disposés autour dudit arbre, engendre un mouvement de type orbital du plateau, l'autre extrémité libre de l'arbre étant, d'une part guidée en rotation au sein du bâti de la machine et d'autre part, entraînée en rotation par un moteur.

D'autres caractéristiques et avantages de la présente invention ressortiront de la description faite ci-après, en référence aux dessins annexés qui en illustrent un exemple de réalisation dépourvu de tout caractère limitatif. Sur les figures :

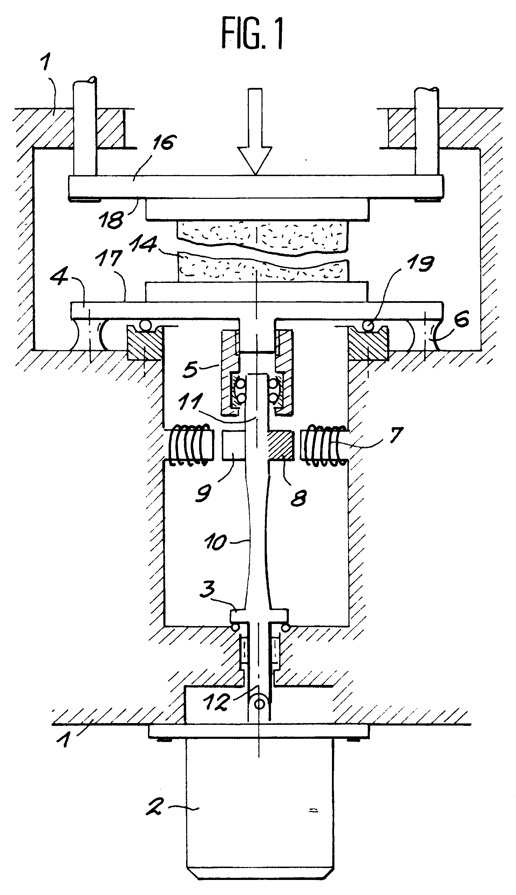

- la figure 1 est une vue plane et en coupe d'une machine équipée d'un dispositif de vibration épicycloïdale ;
- la figure 2 est une vue plane et en coupe des bobines, au niveau du plan de coupe A-A ;
- la figure 3 illustre le mouvement du plateau, lorsque les bobines sont alimentées ;
- la figure 4 représente la trajectoire d'un point du plateau, dans la phase transitoire de démarrage.
- la figure 5 est une vue plane et en coupe des bobines, comportant un autre mode de réalisation de l'excroissance magnétique ;
- la figure 6 est une vue plane et en coupe des bobines, comportant un autre mode de réalisation de l'excroissance magnétique, sous la forme d'un électro-aimant.

Selon un exemple préféré de réalisation d'une machine comportant le dispositif de mise en vibration selon l'invention, elle est munie, dans une partie quelconque de son bâti 1, d'un moteur électrique 2, notamment du type asynchrone, série ou courant continu, entraînant un arbre 3 solidaire d'un plateau 4.

Selon un autre mode préféré de réalisation, on substitue le moteur électrique 2 par un autre type d'organe de puissance, notamment du type pneumatique ou hydraulique...

La liaison entre le plateau 4 et l'arbre 3 est réalisée par l'intermédiaire d'un organe d'accouplement 5, notamment du type rotule ou cardan, combiné avec un organe permettant la translation de l'arbre suivant son axe, notamment du type douille de guidage ; cette liaison transforme le mouvement épicycloïdal issu de la rotation de l'arbre moteur 3 et de l'orbite générée par l'attraction magnétique en une combinaison de mouvements de translations dans le plan du plateau 4. Le plateau 4 est également rendu solidaire du bâti 1 de la machine par l'intermédiaire d'une pluralité de plots élastiques 6 d'accouplement, généralement constitués de "silent bloc" ou d'organes élastiques du genre ressort. Le plateau 4 est maintenu parallèle au plan du bâti 1 par des butées de guidages 19 autorisant tous mouvements dans le plan perpendiculaire à l'axe de rotation du moteur et s'opposant à tout effort appliqué suivant cet axe par le plateau 16. La cinématique ainsi réalisée entre le plateau 4 et l'arbre du moteur 3 garantit que lorsque celui-ci est en rotation, il engendre une vibration du plateau 4 dont l'un des points matériels décrit une courbe de type épicycloïdal, dont le nombre et l'amplitude des ventres sont fonction du nombre de bobines 7 mises sous tension.

L'arbre 3 est pourvu, à son extrémité et à proximité de la jonction plateau/arbre, d'une excroissance 8 réalisée dans un matériau magnétique, notamment en ferrite ou en matériau feuilleté. La longueur de cet arbre 3 est suffisamment importante pour que l'on puisse exploiter sa flèche lorsqu'il est soumis à des sollicitations radiales. A l'opposé de cette excroissance 8, on solidarise par des moyens connus et sur l'arbre 3, globalement sur le même diamètre que la pièce magnétique, une masse amagnétique 9 afin de contrecarrer, d'une part le balourd qui se crée lorsque l'arbre 3 est mis en rotation et d'autre part, les vibrations parasites.

Selon une autre caractéristique de cet arbre 3, il dispose d'au moins une zone longitudinale 10 de moindre section s'étendant entre son extrémité 11 liée au plateau 4 vibrant et son extrémité 12 solidaire de l'organe d'entraînement.

Selon un autre mode de réalisation d'une machine équipée d'un dispositif de vibration épicycloïdale, on prévoit que le moteur 2 n'est pas directement placé dans l'axe de l'arbre 3 mais est relié à ce dernier par l'intermédiaire d'une pluralité d'organes de transmission 13, notamment du type poulies et courroies (non représentées sur les figures), connectés entre eux et transmettant le mouvement de rotation issu du moteur 2 à l'arbre 3 solidaire du plateau 4.

On prévoit également de disposer sur le bâti 1 de la machine et en regard de la zone couverte par l'excroissance 8 magnétique, lorsque cette dernière décrit un tour complet, une pluralité d'électro-aimants 7 soumis à une tension continue. Ainsi, lorsque la tension est appliquée, le passage du courant dans le bobinage crée un champ magnétique induit qui, lorsqu'il se trouve traversé par l'excroissance magnétique 8, attire l'extrémité 11 de l'arbre 3 en direction du noyau, provoquant de ce fait une sollicitation radiale sous la forme d'un flambage de l'arbre lié au plateau 4. Lorsque ce phénomène est répété autant de fois qu'il existe d'électro-aimants 7 soumis à une tension continue, un point situé à la périphérie de l'arbre 3 en rotation, décrit un mouvement ondulatoire. Les caractéristiques mécaniques de l'arbre 3, notamment sa rigidité, lui permettent entre deux sollicitations radiales de tendre vers sa position de repos. Ce phénomène de retour dans une position de stabilité est amplifié par la force centripète dépendante de la vitesse de rotation du moteur 2.

Le mouvement imprimé à l'arbre 3 du moteur est transmis au plateau 4, et par voie de conséquence, à la pièce thermoplastique 14 supportée qui lui est rendue solidaire par des moyens connus tels que notamment des montages d'usinage, bridage, moulage, etc...

L'amplitude et la trajectoire du plateau 4, qui sont quelques uns des principaux paramètres déterminant pour la qualité de la fusion de matière ainsi provoquée, peuvent être ajustées en fonction du nombre et du choix de la combinaison des électro-aimants 7 mis sous tension, de l'énergie électrique appliquée à ces derniers, de la vitesse de rotation de l'arbre 3. Par ailleurs, la rupture du champ d'attraction provoque ipso-facto le retour de l'arbre 3 dans une position neutre.

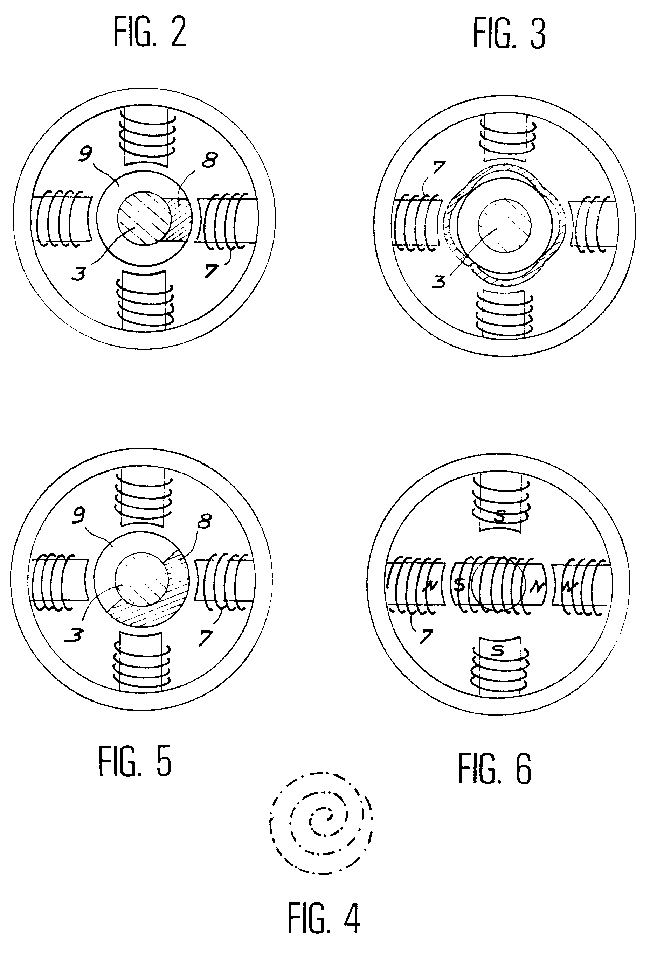

Selon un autre mode de réalisation, l'excroissance 8 formant le noyau magnétique mobile est assimilée à un secteur de dimension variable permettant à un instant donné d'embrasser le champ magnétique de un ou plusieurs électro-aimants 7 simultanément (cf. figure 5).

Selon un autre mode de réalisation, l'excroissance 8 formant le noyau magnétique mobile est un électro-aimant alimenté à travers une connexion autorisant la rotation, notamment du type balais ou à collecteur tournant et engendrant une combinaison de forces d'attraction et de répulsion selon la polarité des masses magnétiques en coïncidence (cf. figure 6).

Selon un autre mode de réalisation, l'arbre 3 peut être constitué de deux parties distinctes dont l'une est solidaire du plateau 4 et l'autre solidaire de l'arbre du moteur 2, reliées entre elles par un accouplement élastique, notamment d'une combinaison de cardan avec ressort.

Le bâti 1 de la machine comporte également un autre plateau 16 disposé sensiblement en regard du plateau 4 oscillant. Le second plateau 16 est guidé en translation, mais ne peut tourner en rotation, selon une direction parallèle à l'axe perpendiculaire du plateau 4 oscillant. L'espace inter-plateaux ainsi créé permet d'introduire entre la face supérieure 17 du plateau 4 oscillant et la face inférieure 18 du second plateau 16, les deux pièces thermoplastiques de hauteur variable.

Le second plateau 16 est soumis, par des moyens connus tels que notamment vérins, ressorts, cames..., lors des opérations de soudage, à une force de pression s'exerçant perpendiculairement par rapport à la surface du plateau.

L'invention telle que précédemment décrite génère de nombreux avantages :
- la déformation de l'axe de révolution sans contact mécanique n'induit aucune usure et pratiquement aucun entretien ;
- l'alimentation des bobines par tension continue supprime la complexité liée à une alimentation à variation de fréquence ;
- le réglage de la vitesse de frottement entre les deux pièces à assembler est seulement fonction de la vitesse de rotation de l'arbre moteur et du nombre d'électroaimants mis sous tension ;
- la fusion s'amorce selon une courbe de Corriolys et rejoint une courbe épicycloïdale garantissant une grande qualité de soudure ;
- la rupture du champ magnétique stoppe les opérations de soudage.

Il demeure bien entendu que la présente invention n'est pas limitée aux exemples de réalisation décrits et représentés ci-dessus.

## Revendications

1. Dispositif de mise en vibration orbitale, caractérisé en ce qu'il comprend au moins un arbre (3) solidaire par l'une de ses extrémités (11) à un plateau (4), connecté par des moyens élastiques (6) au bâti (1) de la machine, et supportant en outre une pièce thermoplastique (14), ledit arbre (3) étant pourvu au niveau de cette extrémité (11) d'une excroissance magnétique (8), dont la mise en rotation au sein d'une pluralité de champs magnétiques provoqués par la mise sous tension d'une pluralité d'électro-aimants (7) disposés autour dudit arbre (3), engendre un mouvement de type épicycloïdal du plateau (4), l'autre extrémité libre (12) de l'arbre (3) étant, d'une part guidé en rotation au sein du bâti (1) de la machine et d'autre part, entraîné en rotation par un moteur (2).

2. Dispositif selon la revendication 1, caractérisé en ce que la liaison entre le plateau (4) et l'arbre (3) est réalisée par l'intermédiaire d'un organe d'accouplement (5), notamment du type rotule ou cardan, combiné avec un organe permettant la translation de l'arbre suivant son axe, notamment du type douille de guidage.

3. Dispositif selon l'une des revendications 1 ou 2, caractérisé en que l'arbre (3) est pourvu, à son extrémité (11) et à la proximité de la jonction plateau/arbre, d'une excroissance (8) réalisée dans un matériau magnétique, notamment en ferrite ou en matériau feuilleté, la longueur de cet arbre (3) étant en outre suffisamment importante pour que l'on puisse exploiter sa flèche lorsqu'il est soumis à des sollicitations radiales.

4. Dispositif selon l'une quelconque des revendications précédentes, caractérisé en ce que l'on solidarise par des moyens connus et sur l'arbre (3), une masse (9), notamment amagnétique, afin de contrecarrer, d'une part le balourd qui se crée lorsque l'arbre (3) est mis en rotation et d'autre part, les vibrations parasites.

5. Dispositif selon l'une quelconque des revendications précédentes, caractérisé en ce que l'arbre (3) dispose d'au moins une zone longitudinale (10) de moindre section pour favoriser la déformation, s'étendant entre son extrémité (11) liée au plateau (4) vibrant et son extrémité (12) solidaire de l'organe d'entraînement (2).

6. Dispositif selon l'une quelconque des revendications précédentes, caractérisé en ce que l'on prévoit que le moteur (2) n'est pas directement placé dans l'axe de l'arbre (3) mais est relié à ce dernier par l'intermédiaire d'une pluralité d'organes de transmission (13), connectés entre eux et transmettant le mouvement de rotation issu du moteur.

7. Dispositif selon l'une quelconque des revendications précédentes, caractérisé en ce que le moteur (2) peut entraîner plusieurs arbres (3) solidaires d'un unique ou d'une pluralité de plateaux (4).

8. Dispositif selon l'une quelconque des revendications précédentes, caractérisé en ce que l'on interpose entre l'arbre (3) et le moteur (2), un dispositif d'embrayage (15) de manière à ce que le moteur puisse tourner en continu, indépendamment des cycles de soudage, ce qui garantit la pérennité de l'organe moteur (2).

9. Dispositif selon l'une quelconque des revendications précédentes, caractérisé en ce que l'excroissance (8) formant le noyau magnétique mobile est assimilée à un secteur de dimension variable permettant à un instant donné d'embrasser le champ magnétique de un ou plusieurs électro-aimants (7) simultanément.

10. Dispositif selon l'une quelconque des revendications précédentes, caractérisé en ce que l'excroissance (8) formant le noyau magnétique mobile est un électro-aimant alimenté à travers une connexion autorisant la rotation, notamment du type balais ou à collecteur tournant et engendrant une combinaison de forces d'attraction et de répulsion selon la polarité des masses magnétiques en coïncidence.

11. Dispositif selon l'une quelconque des revendications précédentes, caractérisé en ce que l'arbre (3) est constitué de deux parties distinctes dont l'une est solidaire du plateau (4) et l'autre solidaire de l'arbre du moteur (2), reliées entre elles par un accouplement élastique, notamment d'une combinaison de cardan avec ressort.

12. Dispositif selon l'une quelconque des revendications précédentes, caractérisé en ce que l'on dispose sur le bâti (1) de la machine et en regard de la zone couverte par l'excroissance (8) magnétique, lorsque cette dernière décrit un tour complet, une pluralité d'électro-aimants (7) soumis à courant continu.

## Claims

1. Device for creating orbital vibration, characterized in that it comprises at least one shaft (3), integrally connected by one of its ends (11) to a plate (4), connected by elastic means (6) to the bed-plate (1) of the machine, and supporting in addition a thermoplastic component (14), said shaft (3) being provided, at the level of this end (11), with a magnetic excrescence (8), the rotational movement of which within a plurality of magnetic fields caused by the energizing of a plurality of electromagnets (7) disposed around said shaft (3), creates a movement of the epicycloidal type of the plate (4), the other free end (12) of the shaft (3) being, on the one hand, rotationally guided within the bed-plate (1) of the machine and, on the other hand, rotationally driven by a motor (2).

2. Device according to Claim 1, characterized in that the connection between the plate (4) and the shaft (3) is realized by means of a coupling element (5), notably of the swivel or cardan type, combined with an element allowing the translation of the shaft along its axis, notably of the guiding sleeve type.

3. Device according to one of Claims 1 or 2, characterized in that the shaft (3) is provided, at its end (11) and in proximity to the plate/shaft junction, with an excrescence (8) made of a magnetic material, notably of ferrite or a laminated material, the length of this shaft (3) being, in addition, sufficiently large for its flexion to be exploited when it is subjected to radial loadings.

4. Device according to any one of the preceding Claims, characterized in that a mass (9), notably non-magnetic mass, is fixed by known means on the shaft (3) in order to counteract, on the one hand, the imbalance that is created when the shaft (3) is set in rotation and, on the other hand, the parasitic vibrations.

5. Device according to any one of the preceding Claims, characterized in that the shaft (3) has at least one longitudinal zone (10) of reduced section for favouring deformation, extending between its end (11) connected to the vibrating plate (4) and its end (12) integrally connected to the drive element (2).

6. Device according to any one of the preceding Claims, characterized in that it is arranged that the motor (2) is not placed directly in the axis of the shaft (3), but is connected to the shaft by means of a plurality of transmission elements (13), connected to one another and transmitting the rotational movement coming from the motor.

7. Device according to any one of the preceding Claims, characterized in that the motor (2) may drive several shafts (3) integrally connected to a single plate or a plurality of plates (4).

8. Device according to any one of the preceding Claims, characterized in that a clutch device (15) is interposed between the shaft (3) and the motor (2), in such a way that the motor can revolve continuously independently of the welding cycles, thus assuring the long life of the motor element (2).

9. Device according to any one of the preceding Claims, characterized in that the excrescence (8) forming the movable magnetic core is assimilated to a sector of variable dimensions, allowing, at a given instant, the magnetic field of one or more electromagnets (7) to be encompassed simultaneously.

10. Device according to any one of the preceding Claims, characterized in that the excrescence (8) forming the movable magnetic core is an electromagnet supplied through a connection permitting rotation, notably of the brush type or with a revolving collector, and creating a combination of attraction and repulsion forces depending upon the polarity of the magnetic masses in coincidence.

11. Device according to any one of the preceding Claims, characterized in that the shaft (3) is composed of two distinct parts, the one of which is integrally connected to the plate (4) and the other integrally connected to the shaft of the motor (2), these parts being connected to one another by an elastic coupling, notably a combination of cardan joint and spring.

12. Device according to any one of the preceding Claims, characterized in that a plurality of electromagnets (7) supplied with direct current is disposed on the bed-plate (1) of the machine and opposite the zone covered by the magnetic excrescence (8), when the latter describes one complete revolution.

## Patentansprüche

1. Vorrichtung zur Erzeugung von Orbitalschwingungen, **dadurch gekennzeichnet**, daß es zumindest eine Welle (3) umfaßt, die mit einer ihrer Extremitäten (11) an einer Platte (4) befestigt ist, die durch elastische Mittel (6) mit dem Maschinenbett (1) verbunden ist, und die andererseits ein thermoplastisches Teil (14) hält, wobei die Welle (3), die auf der Höhe dieser Extremität (11) mit einer magnetischen Ausstülpung (8) versehen ist, deren in Rotationversetzen innerhalb einer Vielzahl magnetischer Felder durch das unter Spannungsetzen einer Vielzahl von Elektromagneten (7) provoziert wird, die um die Welle (3) herum angeordnet sind, eine Bewegung epizykloidischer Art der Platte (4) erzeugt, wobei das andere freie Ende (12) der Welle (3) einerseits innerhalb des Maschinenbettes (1) drehbar geführt ist und andererseits durch einen Motor (2) in Rotation versetzt ist.

2. Vorrichtung nach Anspruch 1, **dadurch gekennzeichnet**, daß die Verbindung zwischen der Platte (4) und der Welle (3) mittels eines vorzugsweise kugelgelenk- oder kardanartigen Kupplungsorganes (5) realisiert ist, kombiniert mit einer vorzugsweise führungshülsenartigen Einrichtung, die eine Translation der Welle entlang ihrer Achse zuläßt.

3. Vorrichtung nach einem der vorhergehenden Ansprüche 1 oder 2, **dadurch gekennzeichnet**, daß die Welle (3) an seiner Extremität (11) und in der Nähe der Verbindung Platte/Welle mit einer Ausstülpung (8) versehen ist, die aus einem magnetischen Material gebildet ist, vorzugsweise Ferrit oder ein lamellenartiges Material, wobei die Länge dieser Welle (3) andererseits ausreichend groß ist, damit man Ihre Durchbiegung ausnutzen kann, wenn sie radialen Plastungen unterworfen ist.

4. Vorrichtung nach einem der vorhergehenden Ansprüche, **dadurch gekennzeichnet**, daß auf der Welle (3) mit bekannten Mitteln eine Masse (9) befestigt ist, die vorzugsweise nicht magnetisch ist, mit dem Ziel einerseits der Unwucht entgegenzuwirken, die entsteht, wenn die Welle (3) in Rotation versetzt wird sowie andererseits den Störschwingungen.

5. Vorrichtung nach einem der vorhergehenden Ansprüche, **dadurch gekennzeichnet**, daß die Welle (3) mit zumindest einem Längsbereich (10) geringen Querschnitts vergehen ist, um die Deformation zu begünstigen, der sich zwischen der mit der vibrierenden Platte (4) verbundenen Extremität (11) und der mit dem Antriebselement (2) verbundenen Extremität (12) befindet.

6. Vorrichtung nach einem der vorhergehenden Ansprüche, **dadurch gekennzeichnet**, daß vorgesehen ist, daß der Motor (2) nicht direkt an der Achse der Welle (3) plaziert ist sondern mit der letzten mittels einer Vielzahl von Übertragungselementen (13) verbunden ist, die miteinander verbunden sind und die Bewegung der von dem Motor ausgehenden Rotation übertragen.

7. Vorrichtung nach einem der vorhergehenden Ansprüche, **dadurch gekennzeichnet**, daß der Motor (2) mehrere Wellen (3) antreiben kann, die mit einer einzigen oder einer Vielzahl von Platten (4) verbunden sind.

8. Vorrichtung nach einem der vorhergehenden Ansprüche, **dadurch gekennzeichnet**, daß zwischen der Welle (3) und dem Motor (2) eine Arretiervorrichtung (15) derart angeordnet ist, daß der Motor unabhängig von den Schweißzyklen kontinuierlich drehen kann, was die Langlebigkeit der Motoreinrichtung (2) garantiert.

9. Vorrichtung nach einem der vorhergehenden Ansprüche, **dadurch gekennzeichnet**, daß die Ausstülpung (8), die den mobilen magnetischen Kern bildet, einem Querschnitt variabler Dimension angeglichen ist, der das gleichzeitige, simultane Umfassen der magnetischen Felder von einem oder mehreren Elektromagneten (7) zuläßt.

10. Vorrichtung nach einem der vorhergehenden Ansprüche, **dadurch gekennzeichnet**, daß die Ausstülpung (8), die den mobilen magnetischen Kern bildet, ein Elektromagnet ist, der über eine Verbindung versorgt wird, die eine Rotation zuläßt, vorzugsweise mit Schleifkontakten oder drehenden Kollektoren, die eine Kombination von Anziehungs- und Abstossungskräften gemäß der Polarität der zusammentreffenden magnetischen Massen erzeugt.

11. Vorrichtung nach einem der vorhergehenden Ansprüche, **dadurch gekennzeichnet**, daß die Welle (3) aus zwei unterschiedlichen Teilen besteht, deren eines an der Platte (4) befestigt ist und deren anderes an der Welle des Motors (2) befestigt ist, die untereinander durch eine elastische Kupplung, vorzugsweise eine Kardan-Federkombination, verbunden sind.

12. Vorrichtung nach einem der vorhergehenden Ansprüche, **dadurch gekennzeichnet**, daß auf dem Maschinenbett (1) gegenüber der durch die magnetische Ausstülpung (8) bedeckten Zone, im Falle daß diese letzte eine komplette Drehung beschreibt, eine Vielzahl von Elektromagneten (7) angeordnet sind, die unter Gleichstrom stehen.
